# EUROPEAN PATENT SPECIFICATION

(11) **EP 4 310 261 B1**
(45) Date of publication and mention of the grant of the patent: **08.07.2026**
(21) Application number: 22185505.9
(22) Date of filing: 18.07.2022
(51) Int. Cl.: E02F 3/43, E02F 9/26

(54) **A SYSTEM FOR HANDLING THE SEAMLESS TRANSITION OF BREAKLINES DURING AN EXCAVATION TASK**
SYSTEM ZUM HANDHABEN DES NAHTLOSEN ÜBERGANGS VON BRUCHLINIEN WÄHREND EINER AUSGRABUNGSAUFGABE
SYSTÈME DE GESTION DE LA TRANSITION SANS INTERRUPTION DE LIGNES D'INTERSECTION AU COURS D'UNE TÂCHE D'EXCAVATION

(43) Date of publication of application: 24.01.2024
(73) Proprietor: Leica Geosystems Technology A/S, 5220 Odense SØ (DK)
(72) Inventor: Kjaergaard, Lars, 5250 Odense SV (DK); Costello, Sean, 9450 Altstätten (CH); Micarelli, Pierluigi, 9000 St. Gallen (CH)
(74) Representative: Kaminski Harmann

(56) References cited:
- EP-B1- 3 719 212
- WO-A1-2020/050997
- DE-U1- 202011 003 220

## Description

### FIELD OF THE INVENTION

The present invention relates to an excavating machine equipped with a tool allowing up to six degree-of-freedom (DoF) in the position and orientation (pose) of the tool in the real space and a method for controlling the heading and the direction of motion of the tool in an excavation task during the transition from one polygon in the reference surface, to another polygon in the reference surface.

### BACKGROUND OF THE INVENTION

Excavators are construction machinery comprising a tool, in particular a bucket, an excavator arm for moving the tool, the excavator arm typically comprising multiple joints, e.g. a boom, a stick, a chassis, typically a chassis rotatable about 360°, on a movable undercarriage having tracks or wheels. These machines are used in many ways, e.g. for digging, landscaping, material handling. Generic excavators are typically equipped with an adapter allowing a rapid exchange of the tools configured for specific tasks. Due to that feature contemporary excavators may also be equipped e.g. with a hydraulic saw and mover for brush cutting or forestry task, with hydraulic claws, cutters and breakers for demolition work, with driving piles or hydraulic drills for mining task or with snowplows and snow bowlers for snow removing tasks.

Another typical embodiment of an excavating machine is a so-called backhoe excavator or backhoe. The chassis of an excavator is another type of work machine, e.g. a tractor and the excavator arm is attached in a permanent or temporary fashion to the backside of the work machine. E.g. JP 2010-71054A discloses such a work machine.

By the way of the example, unless otherwise specified, excavators representing from here on a more general class of excavating machines, the specific features of other types of excavating machines, in particular backhoes, might be applied accordingly.

By the way of example buckets are presented from here on as a representative of a generic tool of the excavator. The specific features of other types of excavator tools, e.g. rakes, might be applied accordingly. Furthermore, since generic excavators are typically configured to exchange the tools rapidly, without special preparatory steps, and under field conditions using the bucket as representative of a generic tool of the excavator, does not mean that an excavator according to the present invention has to be equipped with a bucket or any other tool in a permanent fashion.

Buckets comprise a bucket edge, the edge is dedicated for contacting a surface. Buckets themselves are also used in various shapes and size. For example, a wide, large capacity (mud) bucket with a straight cutting edge is used for cleanup and levelling. In particular, a straight cutting edge is typically used for soft material to be dug, wherein for harder material the cutting edge is formed by a row of teeth. By way of another example, a general purpose bucket is generally smaller, stronger, and has hardened side cutters and teeth used to break through hard ground and rocks.

Generic excavators have a house or cab for the excavator operator in the excavator chassis. The chassis is typically rotatable. Typical excavators share a basic setup, wherein the section of the excavator arm closest to the cab is referred to as the (main) boom, while the section which carries the tool is referred to as the stick (also referred to as the dipper or the dipper-stick). By the way of example unless otherwise specified a "conventional" excavator setup wherein the chassis is rotatable and the arm comprises the boom and the stick representing from here on a more general setup. The specific features of other types of setup, in particular swing boom excavators, might be applied accordingly.

A typical modern excavator utilizes hydraulic cylinders and motors to accomplish the movement of the arm. Other analogous methods, e.g. wincher and steel ropes are also possible. By the way of example hydraulic cylinders and motors are presented from here on as a representative of a generic mean of driving the excavator arm. The specific features of other means of driving the excavator arm, e.g. steel ropes, electric motors, etc. might be applied accordingly.

The (main) boom attaches to the cab, and can be one of several different configurations, e.g. a mono boom allowing no movement apart from straight up and down, or a knuckle boom articulating at the so-called "knuckle" near the middle, letting it fold back like a finger. Another option is a hinge at the base of the boom allowing it to pivot independent to the house, e.g. up to 180 degrees. However, the latter is generally available only to compact excavators. Further, somewhat specialized configurations are known, e.g. triple-articulated booms.

Attached to the end of the boom is the stick, wherein the stick length varies, e.g. depending whether reach (longer stick) or break-out power (shorter stick) is required. The stick length may also be hydraulically adjustable.

Typically, the tool is attached to the stick via a tool joint allowing at least a swiveling of the tool with respect to the stick in a pitch direction, typically up and down. Often also a swiveling in a tilt direction is possible, e.g. left and right.

A special excavator type further features a so-called tilt-rotator arrangement between the end of the stick and the tool in order to increase the flexibility and precision of the excavator. For example, such tilt-rotator excavators are often used in the countries of Scandinavia. A tilt-rotator can best be described as a wrist between the stick and the tool, allowing the tool to rotate - typically by 360 degrees - about a rotor axis, wherein the tool can further be swiveled, e.g. in each case up to ±45 degrees, about a pitch axis perpendicular to the rotor axis, and a tilt axis perpendicular to the rotor axis and the pitch axis. An excavator system and controls for a tilt-rotator is described e.g. in EP 2 364 389 B1.

A tilt-rotator allows the precise adjustment of the pose of the tool, in particular the tool edge, with 6 DoF and to define a direction of motion of the tool with a further independent 3 DoF in an external reference system. By the way of example tilt-rotators are presented from here on as a representative of a generic setup allowing the 6 DoF pose, in particular the heading, and 3 DoF direction of motion control of the tool in an external reference system. The specific features of other excavator arms with similar capabilities might be applied accordingly.

One widespread way of positioning the bucket or defining a direction for the bucket is that the operator defines the position of the hydraulic cylinders directly e.g. with a joystick, such control means are disclosed e.g. in EP 1 705 545 A1. However, even simple movements, like bringing the bucket straight forward in a horizontal movement at the same time as the bucket is opened, multiple coordinated movements on the joystick are needed. Since the orientation of the hydraulic cylinders changes constantly during the movement of the tool, these movements are not intuitive and error-prone. Consequently the execution is often unproductive even for the trained and experienced operator.

Systems which aid the driver to set a given real space position of the bucket are known in the prior art, e.g. WO 2014/209209 A1 discloses a system wherein the joints of the excavator arm are adjusted automatically to provide a real space movement designated by the operator.

A typical excavator has more DoF than are strictly necessary for the task of grading a planar surface. This means that the bucket edge can be aligned with the surface using multiple combinations of joint angles. There may also be multiple options for a repositioning path, and an optimal path with respect to certain criteria may be computed. Semi-automatic remapping systems, in particular semi-automatic remapping systems based on inverse kinematics, wherein the operator only has to select a new target pose and the repositioning path is generated and controlled by a computing unit of the excavator, are known in the prior art, e.g. US 9,976,285 B2 or EP 3 719 212 B1 discloses such a system.

A system wherein the position of the excavator and at least its bucket in an external coordinate system and in respect to a design data representing the construction task is also known in the prior art. E.g. EP 3 719 212 B1 discloses a system, wherein the absolute or relative position of the excavator is determined utilizing a sensor arrangement and the bucket is moved upon an operator command to a desired pose with respect to the design data.

The design data typically comprises a reference surface. For a typical excavating task the reference surface, e.g. a ditch or a railway embankment, consists of polygons. The joining of the polygons are known as breaklines. A seamless transition of the breakline is only possible, if the bucket is aligned with the said breakline. If the bucket is not aligned, then either the bucket breaks through the reference surface, or a triangular shaped residue is left over.

Prior art excavators can prevent penetrating the reference surface, however at the expense of leaving a residue extruding above the surface. The state of the art requires the repositioning of the excavator, and commencing a second excavating operation, which leads to inefficiencies.

### OBJECT OF THE INVENTION

In view of the above circumstances, the object of the present invention is to provide a controller for an excavating machine, configured to provide a seamless transition of the breakline, eliminating the need of a second excavating task for removing the residues. The invention is further relating to a method and a computer program product to realize the seamless transition of the breakline.

This objective is achieved by realizing the characterizing features of the independent claims. Features, which further develop the invention in an alternative or advantageous manner are described in the dependent patent claims.

### SUMMARY OF THE INVENTION

The invention relates to a controller for an excavating machine. The excavating machine comprises a tool, an arm, a chassis, and a set of sensors.

The excavating machine might be arranged permanently. Alternatively, the excavating machine might be another type of work machine, or a tractor with an excavating arm attached to it temporarily. One or more sensors comprised by set of sensors might be positioned in or on the chassis, the arm, or the tool. One or more sensors comprised by the set of sensors might be positioned externally.

The tool comprises a tool edge. The tool edge might be dedicated for contacting a surface. The tool edge might be a continuous physical edge of the tool, or a fictitious edge, in particular in the case of teethed buckets or rakes. By the way of the example from here on, the position of the tool is represented by the position of the tool edge, in particular the middle of the tool edge. For certain tasks the choice of different reference points might be beneficial. The specific features of alternative reference points, e.g. the center of the tool, might be applied accordingly. By the way of the example from here on the pose of the excavating tool is a pose in an external, in particular global, coordinate system. For certain tasks the choice of different coordinate systems might be beneficial. The specific features of alternative coordinate systems, might be applied accordingly.

The arm comprises multiple links and a tool joint for moving the tool, wherein the tool is attached to the tool joint. While some features of the invention are described utilizing a specific design, the present invention is not limited to those designs. The present invention can be applied for e.g. an excavator or a backhoe type excavating machine. The present invention is not limited to a design, wherein the excavating arm is permanently attached. The present invention can be realized by excavating machines whose arms are driven by hydraulic means, by means of steel ropes, by means of electric motors or by any alternative means. The present invention can be realized by any specific design of the boom, the stick, or the tool joints. The present invention can also be realized by another forms of articulated arms.

The set of sensors is configured to provide sensor reading data regarding a position and a heading of the tool. The set of sensors might provide sensor reading data regarding a 6 DoF pose of the tool. The operator might have the freedom to define orientation parameters other than heading. The orientation parameters other than the heading may be limited due to other circumstances relating to the excavation task. The set of sensors might provide sensor reading data regarding a direction of motion of the tool. The set of sensors may further comprise positioning sensors, which provide a sensor reading on the position of the excavator in respect to an external, in particular a global coordinate system. Such sensors might comprise one or more GNSS sensors, in particular high precision GNSS sensors allowing a real time kinematics measurement, or a sensor arrangement gaining information from a geodetic survey device, e.g. a total station. The set of sensors may further comprise imaging, scanning, in particular laser scanning, lidar, or radar sensors. While at least a part of the sensors are required to be located in or on the excavator itself, other sensors, in particular positioning sensors in the form of a total station, might be located in an external position. The present invention is no way limited to the utilization of sensors exclusively located in or on the excavator.

The pose of the tool might be provided by direct measurements. The pose of the tool might be provided indirectly by evaluating the state of the chassis and the joints of the arm. The direction of motion of the tool might be provided from a direct measurement. Alternatively the direction of motion might be derived from a rate of change of the pose. Instead of the direction of motion, the velocity vector might also be utilized. Unless otherwise specified the present invention might be carried out by partially or completely substituting the direction of motion with the velocity vector. Supplementary to the velocity vector (linear derivative) an angular velocity might also be derived and utilized

The controller comprises an input interface, and a computing unit. The controller might comprise an output interface. The input interface, the output interface, and the computing unit are functional and not structural definition of the components of the controller. The computing unit, the input interface, and the output interface might be distributed. Some structural components, in particular touchscreens, might provide functionalities for both the input and output interface. Some structural components might provide functionalities for both the computing unit and the input/output interfaces.

The input interface is configured to receive operator steering commands of an operator regarding a desired position and heading and/or movement of the tool. The input interface might be configured to receive operator steering commands of an operator regarding a desired pose of the tool. The movement of the tool might be a rotation. The operator might operate the excavating machine non-remotely, the present invention is however not limited to cases wherein the operator directly operates the excavating machine from the driver cab. The input interface might comprise one or more joysticks. The input interface might allow a direct control of the pose of the links of the arm or the chassis. The input interface might provide the steering commands for the computing unit for a semi-automatic realization of the movement of the excavating tool, in particular in an inverse kinematics. The input interface might comprise the input area of the touchscreen. The input interface might allow the activation of certain features, in particular a selection between manual and semi-automatic modes. The input interface might allow the execution of pre-defined or user-defined automatic movements of the excavator. By the way of example pre-defined or user-defined automatic movements might comprise grading operations with user-defined tool orientation and a pre-defined or a user defined velocity profile (ramp up, constant speed, ramp down). The input interface might allow the activation of operator aid features, in particular to set or limit the velocity of the tool or to lock one or more pose DoF. Such pre-defined or user-defined automatic movements and operator aid features are considered as operator steering commands for the present invention. Needless to say that the person skilled in the art, would realize that the above nonexclusive list comprises features which are combinable with each other.

The input interface might be distributed. Certain functions might be controllable by one or more joysticks, by switches/buttons, while other functions might be controllable by one or more touchscreens. Certain functions might be controllable by two or more alternative means, i.e. by a button on the joystick and/or a separate switch and/or via the input area of the touchscreen. The operator might also provide or modify user-defined operator aid features or automatic movements by the input interface. The skilled person could also realize an alternative input interface analogous to the above list. Such combinations and alternatives are within the meaning of the present invention.

The computing unit is configured to read the operator steering commands and to control the arm to reproduce the desired position and heading and/or movement of the tool. The operator steering commands might comprise pre- or user defined automatic movements or operator aid features.

The computing unit is configured to read a design model comprising a reference surface. The reference surface comprises two polygons defining a breakline. Polygons according to the present invention cover also plane figures which can be locally approximated by polygons near the breakline, in particular non-closed plane figures or plane figures containing curved segments. The computing unit is configured to reference a position and a heading of the tool with respect to the design model. The design model might be a computer aided design model of the excavating task. Needless to say design models based on other design standards are also possible. The direction of motion might be referenced to a first and second polygons of the reference surface. From here on the direction of motion referenced to the second polygon might be called as second direction of motion where this distinction improves the readability of the text. Since the invention can be applied without limitations regarding the frame of reference, these terms are purely descriptive to serve the readability. The direction of motion and the second direction of motion are otherwise equivalent features.

In some embodiments the set of sensors comprises imaging, scanning, in particular laser scanning, lidar, or radar sensors. For such embodiments the excavator might obtain continuously or at regular intervals a status on an actual surface. The computing unit might reference the actual surface to the reference surface and might update a status of an excavating task. Some of these sensors might be located in an external position.

The computing unit might store information on the geometry of the excavating tool. The computing unit might store information on the geometry of a plurality of further tools. The actually mounted tool might be recognized via an automatic recognition functionality, or might be selectable by the operator.

The controller is configured for performing a semi-automatic surface following function, in which operator steering command adjustment commands are generated, based on an actual referenced position and heading of the tool with respect to the design model and on actually read operator steering commands, in order to redirect the tool edge in accordance with the reference surface. Needless to say that instead of the position and heading the 6 DoF pose might be utilized.

It goes without saying that the person skilled in the art might implement alternative design solutions to generate operator steering command adjustment commands. The controller might generate additional commands which provide adjustments to the direct operator steering commands to the chassis or the arm. Alternatively the controller might generate a new set of commands based on an interpretation of the operator steering commands and only the new set of commands are transmitted to the chassis and/or the arm. Alternatively, the controller might lock some joints, in particular the joints responsible for the orientation of the tool, and no operator steering commands are transmitted to these joints. The present invention is not limited to any specific design choice.

The controller is further configured for performing a semi-automatic breakline-transition function including 1.) identifying a breakline-transition move based on actually read operator steering commands, in particular regarding the direction of motion or the velocity of the tool, and based on actual referenced position and heading of the tool with respect to the breakline of the design model, 2.) generating operator steering command adjustment commands, based on actual referenced position and heading of the tool with respect to the design model and on actually read operator steering commands, in order to bring the tool edge to be aligned in parallel with the breakline.

In some embodiments the semi-automatic breakline transition function can generate operator steering command adjustment commands in order to bring tool edge to be aligned in parallel with the breakline with respect to pre- or user-defined automatic movements. Furthermore, the operator steering command adjustment commands might be generated such that they respect the further operator aid features, in particular the velocity limits.

In some embodiments the semi-automatic breakline-transition function is combined with the semi-automatic surface following function. The semi-automatic breakline-transition function is realized by generating operator steering command adjustment commands based on actual referenced position and heading of the tool with respect to the design model and on actually read operator steering commands, in order to 1.) bring the tool edge to be aligned in parallel with the breakline 2.) redirect the tool edge in accordance with the reference surface. Needless to say that pre- or user defined automatic movements or operator aid features might be utilized in combination with such embodiments.

In some embodiments of the semi-automatic breakline-transition function the direction of motion of the tool is perpendicular to the breakline. The semi-automatic breakline-transition function is realized by generating operator steering command adjustment commands, based on an actual referenced pose of the tool with respect to the design model and on actually read operator steering commands, in order to 1.) bring the tool edge to be aligned in parallel with the breakline, 2.) redirect the tool edge in accordance with the reference surface, 3.) move the tool edge along the direction of motion perpendicular to the breakline.

A non-perpendicular direction of motion towards the breakline might be preferable under certain circumstances. Both perpendicular and non-perpendicular approach directions can be realized with a controller according to the present invention. The direction of motion of the tool edge might also be changed during an approach.

In some embodiments after reaching the breakline, the computing unit might align the tool according to the second polygon of the reference surface. Typically a continuous excavating action, wherein the tool movement continues after transiting the breakline and aligned to the second polygon might be preferable. The present invention is however not limited to such embodiments. Other embodiments, in particular, wherein the excavating action is stopped at the breakline, might be possible with a controller according to the present invention.

In some embodiments the controller is further configured for 1.) storing a prior heading data representing the heading of the tool at the activation of the semi-automatic breakline transition function, 2.) automatically restoring the heading of the tool after transiting the breakline based on the prior heading data. Needless to say that during the restoring movement no part of the tool being below the reference surface. The restoring might be executed such that one end of the tool edge is touching the breakline. The alignment to the breakline might be executed such that one end of the tool edge is touching the breakline. This feature is especially beneficial as heading of the tool could influence whether the residues are deposited on the left or the right side of the tool. Thus the operator might prefer to move the tool such that the tool edge is angled.

In some embodiments the controller is further configured for 1.) storing data representing a prior orientation and direction of motion of the tool representing the state at the activation of the semi-automatic breakline transition function, 2.) generating operator steering command adjustment commands in order to redirect the tool to a second orientation and a second direction of motion after transiting the breakline. The second orientation and second direction of motion relative to the second polygon are respectively equal to the stored prior orientation and direction of motion relative to the first polygon.

In some embodiments, the excavating machine is an excavator. In some more specific embodiments, the excavator has a rotatable chassis.

In some embodiments the excavating machine is a backhoe type excavating machine. Needless to say that the person skilled in the art could imagine further realizations of the excavating machine according to the present invention, other than the specific embodiments listed here.

In some embodiments the excavating tool is a bucket and the tool edge is an attack edge configured to contact the surface. Other tools, in particular rakes, bulldozer blades and loaders, might also be utilized according to the invention.

In some embodiments the arm comprises a boom and a stick. The boom might be one of several different configurations, e.g. a mono boom allowing no movement apart from straight up and down, or a knuckle boom articulating at the so-called "knuckle" near the middle, letting it fold back like a finger. Another option is a hinge at the base of the boom allowing it to pivot independent to the chassis, e.g. up to 180 degrees. The stick length may depend on the task, in some embodiments the stick length may also be hydraulically adjustable.

In some embodiments the excavating machine is an excavator, the chassis is rotatable to 360°, the tool is a bucket, the arm comprises a boom and a stick ("conventional setup").

In some embodiments the tool joint is a tilt-rotator. Due to the extra DoF provided by the tilt-rotator, excavators equipped with a tilt-rotator are especially suited to realize the present invention. Alternative embodiments without tilt-rotators nevertheless might also utilize the present invention. The tilt-rotator might be applied together with the "conventional setup" from the preceding paragraph.

In some embodiments the controller is further configured for performing a semi-automatic parallel operation function, including: 1.) identifying a parallel operation move based on actually read operator steering commands, in particular regarding the direction of motion or the velocity of the tool, and based on actual referenced position and heading of the tool with respect to the breakline of the design model, 2.) generating operator steering command adjustment commands, based on actual referenced position and heading of the tool with respect to the design model and based on actually read operator steering commands, in order to a.) redirect the tool edge in accordance with the reference surface, b.) redirect the tool edge into a position, wherein the tool edge touching the breakline, c.) move the tool edge in the reference surface, in a direction parallel to the breakline.

Needless to say that alternative embodiments of the parallel operation function are also possible within the meaning of the present invention. In particular a parallel operation wherein the tool edge is steered with an operator selectable offset from the breakline.

Furthermore the breakline-transition and the parallel operation functions might be combinable for reference surfaces comprising more than one breaklines.

In some embodiments the set of sensors is configured to acquire sensor reading data comprising information on an actual surface. In some embodiments the set of sensors comprises at least one of the following: 1.) an imaging sensor, 2.) a scanning sensor, 3.) a lidar, and 4.) a radar. In some embodiments the controller comprises an output interface. The output interface might be configured to display a.) the pose or the position and heading, of the tool, the reference surface, the actual surface, a status of the semi-automatic breakline-transition function and/or the semi-automatic parallel operation function, and b.) a guidance feedback comprises the position and heading of the tool relative to the breakline. Alternatively the guidance feedback might provide visual or acoustic aid to align the heading, the orientation or the pose of the tool to the breakline.

In some embodiments the input interface comprises an input area of a touchscreen. The input area might be configured to activate and deactivate the semi-automatic breakline-transition function and/or the semi-automatic parallel operation function and/or the guidance feedback with their respective options. The touchscreen might be comprised by the output interface and might display whether breakline-transition function and/or the parallel operation function and/or the guidance feedback are active. Alternative display methods by the means of an output area of another screen, by led lights, or by other visual alternatives are also possible according to the present invention.

The output interface might also display the reference surface and the pose, in particular the heading, of the excavating tool. The output interface might display other information, in particular information on the actual surface, the progress of the excavation task, the position of the excavating machine with respect to the local, or the global reference system, the health of the machine components. The output interface might display the current and the desired position of the tool, the output interface might further display the calculated path by the computing unit. Needless to say that the output interface might not display all the information in a given moment. The information displayed on the output interface might be selectable by the operator. The output interface might comprise a touchscreen, wherein the touchscreen might comprise an input area. The operator might select the information to be displayed using the input area. Alternative input devices might also be utilized.

In some specific embodiments the set of sensors comprises at least one positioning sensor. The output interface might further display absolute position of the excavator. Needless to say that set of sensors can comprise both the positioning and scanning sensors.

The present invention also relates to a method of semi-automatic breakline-transition. The method comprises the steps of 1.) aligning the tool edge in accordance to the reference surface, 2.) identifying the breakline-transition move based on actually read operator steering commands, in particular regarding the direction of motion or the velocity of the tool, and based on actual referenced position and heading of the tool with respect to the breakline of the design model, 3.) generating operator steering command adjustment commands, based on actual referenced position and heading of the tool with respect to the design model and on actually read operator steering commands, in order to a.) bring the tool edge to be aligned in parallel with the breakline and b.) redirect the tool edge in accordance with the reference surface.

In some embodiments tool edge is steered in a direction of motion perpendicular to the breakline. The operator steering command adjustment commands, based on actual referenced position and heading of the tool with respect to the design model and on actually read operator steering commands, are generated in order to a) bring the tool edge to be aligned in parallel with the breakline, b.) redirect the tool edge in accordance with the reference surface, and c.) move the tool edge in a direction of motion perpendicular to the breakline.

In some embodiments the tool edge is stopped automatically at the breakline. After stopping the tool edge, the operator may start a new excavating action at a different location. The operator may continue the transition to the second polygon after aligning the tool. The input interface might be configured to activate a function of stopping at the breakline. The output interface might display whether the function of stopping at the breakline is active.

In some embodiments the direction of motion of the tool is automatically aligned to the second polygon at the breakline. After the alignment the tool might continue with the excavating action in the second polygon. These embodiments are especially beneficial, since they enable a seamless transition of the breakline, without an excessive effort from the operator.

In some embodiments the movement of the tool is unsuspended during the alignment of the tool. These embodiment are especially beneficial, since in these embodiments the alignment process does not disturb the excavating task. Furthermore they also allow to keep the tool aligned, while the direction of motion of the tool being changed. This is especially beneficial for more complex excavation tasks. The controller and/or the operator might limit the extent of the alignment to be carried out during the movement of the tool to protect the tool. Other embodiments, where only certain types of alignments are allowed during the movement of the tool are also within the meaning of the invention.

Alternatively the tool edge might also be aligned in another way, wherein the movement of the tool is first paused, the alignment of the tool carried out, and the movement is restarted after finishing the alignment. The tool might be aligned when the tool edge is touching the breakline, this embodiment is especially beneficial if a heading bias being preferred to push the residues to a given side of the tool. In this alignment method the tool is not steered without a heading bias.

The present invention also relates to a method of semi-automatic parallel operation. The method comprises the steps of: 1.) identifying a parallel operation move based on actually read operator steering commands, in particular regarding the direction of motion or the velocity of the tool, and based on actual referenced position and heading of the tool with respect to the breakline of the design model, 2.) generating operator steering command adjustment commands, based on actual referenced position and heading of the tool with respect to the design model and based on actually read operator steering commands, in order to a.) redirect the tool edge in accordance with the reference surface b.) redirect the tool edge into a position touching the breakline, and c.) move the tool edge in the reference surface, in a direction parallel to the breakline.

Alternative embodiments of the parallel operation are also possible. E.g. it is possible to align the tool that its direction of motion and orientation is parallel to the breakline, while its position is in a predefined distance. Such alignments might be useful for an excavating task to be carried out parallel to the breakline at a certain distance, e.g. excavating a ditch parallel to a motorway embankment or cleaning the breakline from residues.

Furthermore the semi-automatic breakline-transition method and the semi-automatic parallel operation method might be combinable for reference surfaces comprising more than one breaklines

The present invention also relates to a computer program product for a specific embodiment of the controller, which, when executed by the computing unit, causes the automatic execution of the steps of a selected embodiment of the semi-automatic breakline-transition method.

The present invention also relates to a computer program product for a specific embodiment of the controller, which, when executed by the computing unit, causes the automatic execution of the steps of a selected embodiment of the semi-automatic parallel operation method.

### BRIEF DESCRIPTION OF THE DRAWINGS

By way of example only, specific embodiments of the invention will be described more fully hereinafter with reference to the accompanying figures, wherein:
Figure 1a shows the schematics of an excavator.
Figure 1b shows the schematics excavating machine embodied as a tractor equipped with a backhoe excavating arm.
Figure 2 shows the schematics of a coordinate system for the tool in respect to the reference surface.
Figure 3a shows an example of a breakline defined by two interconnected polygons in the reference surface.
Figure 3b shows the prior art of excavating near the breakline.
Figure 3c shows the excavating near the breakline according to the present invention.
Figure 4a shows the schematics of the movement of the tool in the first polygon during a breakline transition with pose restoring.
Figure 4b shows the schematics of the movement of the tool in the second polygon during a breakline transition with pose restoring.
Figure 5 shows the schematics of two modes of excavating near the breakline, with a transition and parallel to the breakline.

### SPECIFIC EMBODIMENTS OF THE INVENTION

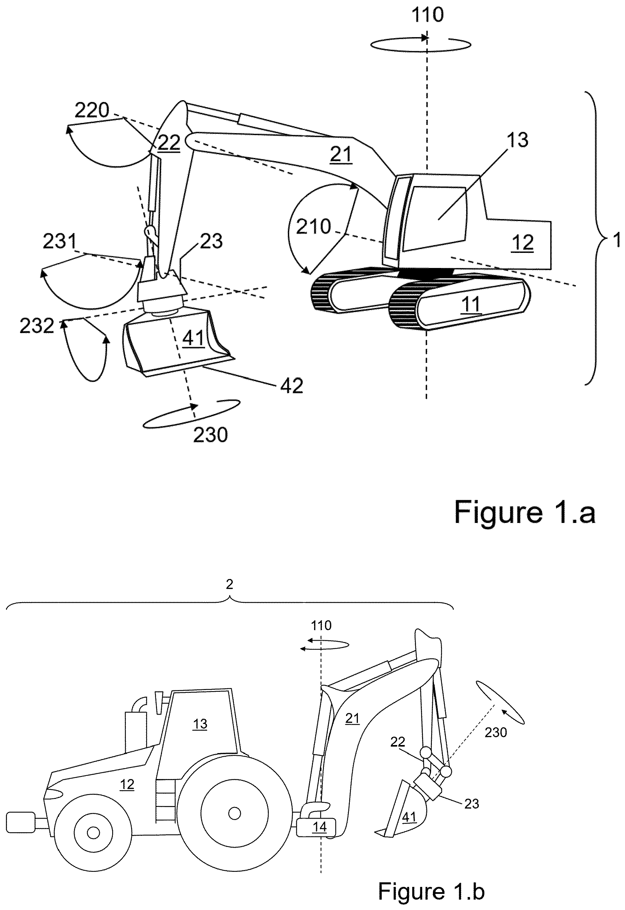

Figure 1a depicts a schematics of an embodiment of the excavating machine as an excavator **1.** The depicted embodiment comprises a tracked undercarriage **11,** a chassis **12,** which is rotatable to the undercarriage with about ±180° around a rotation axis **110,** an excavator arm, and a bucket as a tool **41.**

It is immediately clear for the person skilled in the art that a wheeled undercarriage **11** lies also in the meaning of the present invention. Furthermore embodiments, where the chassis **12** is fixed or only a swing movement of the chassis **12** with yaw angle considerably less ± 180° is allowed in respect to the undercarriage **11** are also within the meaning of the present invention.

The excavating arm comprises a boom **21,** in the depicted embodiment a monoboom. The boom **21** is attached to the chassis **12** next to driver cabin **13.** Alternative embodiments of the boom **21,** in particular knuckle booms, are also within the meaning of the present invention. The boom can be at least pitched around a pitching axis **210** in respect to the chassis **12.** Alternative embodiments, e.g. where the boom **21** can swing in horizontally in respect to the chassis **12** are also within the meaning of the present invention.

The excavating arm further comprises a stick **22.** The stick **22** can swivel around a swivel axis **220.** In the depicted embodiment, the excavator **1** utilizes hydraulic cylinders to pitch the boom **21** and the stick **22.** Contemporary excavators **1** typically utilize various hydraulic components, however alternative means of driving the components of the excavating arm are also within the meaning of the present invention. The excavating arm might be another form of articulated arm. The present invention is not limited to the "conventional setup".

The tool **41** is attached to the tool joint at the end of the stick **22.** The tool joint in the depicted embodiment is a tilt-rotator **23.** A tilt-rotator **23** can best be described as a wrist between the stick **22** and the tool **41,** allowing the tool **41** to rotate - typically by 360 degrees - about a rotor axis **230,** wherein the tool **41** can further be swiveled, e.g. in each case up to ±45 degrees, about a pitch axis **231** perpendicular to the rotor axis **230,** and a tilt axis **232** perpendicular to the rotor axis **230** and the pitch axis **231.** While the tilt-rotator **23** is especially suitable to realize the technical features of the present invention, they are not a mandatory component of an excavating machine according to the present invention.

The tool **41** comprises a tool edge **42.** The tool edge might be configured for contacting a surface. In the depicted bucket, the tool edge **42** is the continuous, real edge of the tool **41.** For other types of tool **41,** in particular teethed buckets or rakes, the tool edge **42** is a fictitious, but definable segment of the tool **41.**

Figure 1b shows an embodiment of the excavating machine as a backhoe 2 type of excavating machine. The chassis **12** in the depicted embodiment is a tractor. Other type of work machines, in particular bulldozers or loaders, can also serve as the chassis **12,** any of these and further alternative embodiments can be utilized to realize the present invention.

The excavating arm, comprising the boom **21** and the stick **22,** is attached to a joint **14,** and can be swiveled around the rotation axis **110.** The boom **21** and the stick **22** can be pitched similarly to that of an excavator **1.** The tool joint might be a tilt-rotator **23** or similar or alternative joints with equivalent characteristics. For transparency reasons only the rotor axis **230** is shown in Figure 1.b. Apart from the mounting of the arm, the backhoe **2** type represents the same options as the excavator **1** type. Consequently, the person skilled in the art could carry out the present invention irrespective of the design of the excavating machine. The tool **41** in the here depicted embodiment is a teethed bucket. Other tools **41,** in particular other types of buckets, blades, loaders or rakes, might be utilized by an excavating machine according to the present invention.

In some embodiments the excavator arm might be permanently arranged on the chassis, in other embodiments, in particular backhoe **2** type arrangements, it might be an auxiliary equipment temporarily arranged. The present invention is not limited to excavating machines with permanently arranged excavator arms.

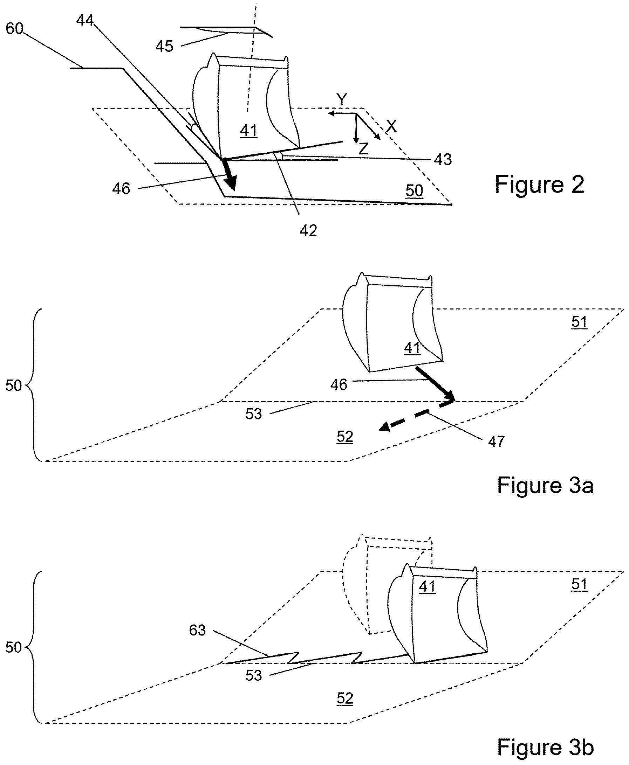

Figure 2 shows the bucket **41** upon establishing contact with the reference surface **50.** The depicted area of the reference surface **50,** marked as a dashed line, is far away from the breakline and is a flat surface without any further feature. The actual surface **60,** marked as the continuous line, can have a shape different than the reference surface **50.** In some embodiments the actual surface **60** might be acquired by the set of sensors. In some other embodiments, the bucket **41** is only referenced to the reference surface **50.**

In the depicted embodiment the position of the tool **41,** in particular the x,y,z position of the center of the edge **42,** is referenced to the reference surface **50,** in particular to the polygon the nearest to the edge **42.** The direction of motion **46** the tool **41** might also be referenced to the reference surface **50.** For an excavator **1** according to the present invention, the direction of motion **46** and the orientation of the tool **41** might be independent from each other. This means that the direction of motion **46** of the tool **41** is determined by the orientation of the chassis **12,** boom **21** and stick **22,** while the orientation of the tool **41** can be independently adjusted by the DoF provided by e.g. a tilt-rotator **23.**

Figure 2 shows a possible coordinate system relative to the reference surface **50.** The orientation of the bucket can be defined utilizing three angles. The angle relative to a plane perpendicular to the Z-axis **44** is traditionally referred as the attack angle, the angle relative to the a plane perpendicular to the X-axis **43** is traditionally referred as the crosscut angle, while the third angle relative to a plane perpendicular to the Y-axis **45** is the heading angle. Alternative definitions of the orientation are within the meaning of the invention. Needless to say that the present invention is not bound to any specific reference systems, and the person skilled in the art can realize the invention using any convenient coordinate system.

The tool edge **42** might be aligned with the reference surface **50** by the following workflow. The x,y,z position of the tool is chosen so, that the tool **41** is substantially above the reference surface **50,** i.e. no changes of the tool orientation might lead to a situation, that a part of the tool **41,** in particular the tool edge **42** is below the reference surface **50.** The tool **41** is aligned so that the crosscut angle **43** to be 0°. The attack angle **44** is aligned so that upon lowering the tool to contact the reference surface **50** no part of the tool **41** will be below the reference surface **50.** The tool **41** is lowered to establish contact with the reference surface **50.** During the lowering of the tool **41,** the attack angle **44** might change. It is clear for the skilled person, that alternatives for this exemplary workflow exist, in particular an alternative workflow might be realized when the tool **41** is near to the reference surface **50,** in particular when the tool edge **42** already contacted the reference surface **50.** The skilled person could realize a workflow optimized for the specific embodiment of the excavating machine.

A typical excavator has more DoF than are strictly necessary for the task of grading a planar reference surface **50.** This means that the bucket edge **42** can be aligned with the surface using multiple combinations of attack angles **44** and heading angles **45.** The attack angle **44** might be optimized depending the excavating task, wherein the heading angle **45** might be optimized so that direction of motion **46** of the tool lays in a plane perpendicular to the tool edge **42.** Alternatively the heading angle **45** might be optimized to drive the residues to a given side of the tool **41.** For an excavating operation from the left to the right, it is beneficial that the left side stays clean and the residues are driven to the right side.

Figure 3a shows an example wherein the reference surface **50** comprises two polygons **51,52.** An intersection of the two polygons **51,52** is colloquially known as a breakline **53.** The polygon closest to the bucket **41** is defined as the first polygon **51.** The direction of motion **46** of the bucket **41** is such that it approaches the breakline **53.** The polygon on the other side of breakline is a second polygon **52.** A second direction of motion **47** of the tool **41** in the second polygon **52** might be different from the actual direction of motion **46.** The direction of motion **46,47** might change at any point during the transition operation. In some embodiments the reference frame might change after transiting the breakline **53.** The excavating action might stop at the breakline **53.**

Figure 3b shows the prior art of excavating near the breakline **53.** While the bucket **41** is aligned to the first polygon **51** it is not aligned to the breakline **53.** The prior art automatic systems are capable of preventing the tool to break through the reference surface **50** at the second polygon **52,** nevertheless the cost of this is the presence of triangular shape residues remaining in the actual breakline **63.** To remove the residues a second excavating step is needed, which might even require the repositioning of the excavator **1.**

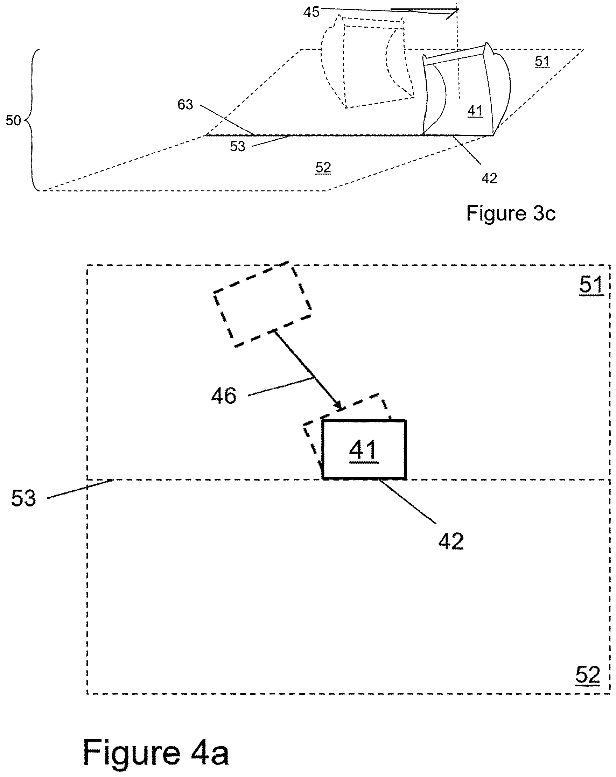

Figure 3c shows the excavating near the breakline **53** according to the present invention. The heading angle **45** of the bucket is aligned so, that upon reaching the breakline **53** the tool edge **42** is parallel to the breakline. As a result the actual breakline **63** corresponds to the breakline **53** of the reference surface **50** and no second excavating step is required to clean the residues.

The semi-automatic breakline-transition function includes the identification of a breakline-transition move based on actually read operator steering commands and on actual referenced position and heading **45** of the tool **41** with respect to the breakline **53.** The further angular components of the actual referenced pose might also be utilized in the identification of the breakline-transition move. The identification of the breakline transition might be based on the direction of motion **46** or the velocity vector of the tool **41.**

In some embodiments the identification is based on a first criterion. The first criterion comprises the tool edge **42** is essentially parallel to the breakline **53** and the tool **41** is approaching the breakline **53** along a direction of motion **46** essentially perpendicular to the breakline **53.** Essentially parallel and essentially perpendicular for the present invention means that the operator positioned the tool **41** with the intention of transiting the breakline **53.**

The semi-automatic breakline-transition function further includes generating operator steering command adjustment commands, based on actual referenced pose of the tool with respect to the design model and on actually read operator steering commands, in order to bring the tool edge **42** to be aligned in parallel with the breakline **53.**

In the embodiment depicted on Figure 3c the operator steering command adjustment commands further comprise the surface following function. While this embodiment of the excavating task is beneficial that it result in an actual surface **60** corresponding the desired reference surface **50** other embodiments are also within the meaning of the present invention.

The excavating task might end at the breakline **53,** the excavating task can also continue into the second polygon **52.** The bucket **41** might be aligned to the second polygon **52** at the breakline **53.** The seamless transition of the breakline **53** and excavating on both polygons **51,52** is an especially beneficial way of using the present invention. The present invention, however, places no limitation on the excavating tasks to be performed.

The alignment of the bucket **41** might be carried out during the approach phase in a continuous fashion. The alignment might be carried out in a two-step process, where the movement of the bucket **41** is first put on hold, and the movement continues after the alignment is complete. A semi-automatic alignment process, without a pause or an extra operator action, is an especially beneficial way of using the present invention. Embodiments, wherein the alignment is carried out upon a request from the operator are also within the meaning of the present invention. In some embodiments guidance feedback might be generated to aid the operator to manually align the tool **41** to the breakline **53,** if due to specific circumstances, the operator prefers to carry out a manual alignment.

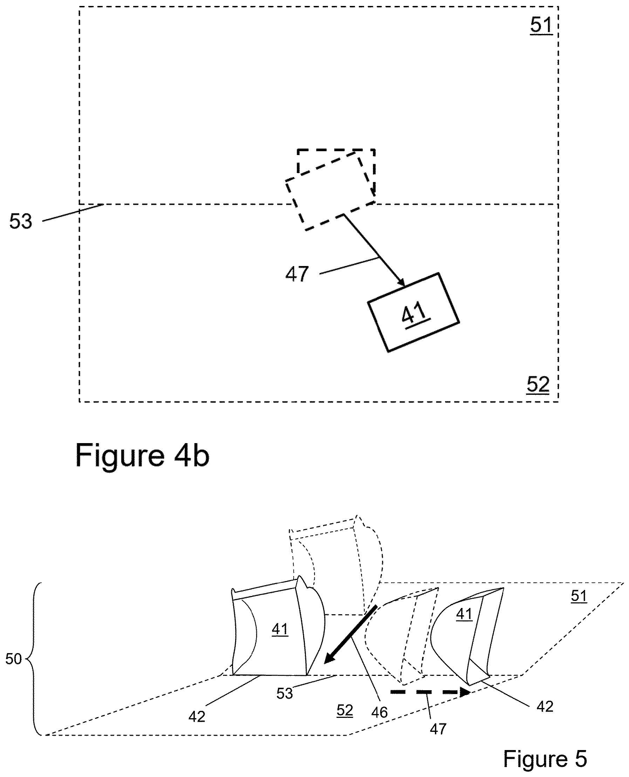

Figure 4a and 4b shows the schematics in a top view of a breakline transition wherein the orientation of the tool **41** is restored after the transition of the breakline. In the first polygon **51** the tool is moved along a direction of motion **46,** the orientation of the tool **41** might be characterized by the crosscut **43,** attack **44** and heading angles **45.** The tool **41** might be redirected in accordance with the first polygon **51,** i.e. the crosscut angle **43** might be 0° and the direction of motion **46** might be parallel to the first polygon **51.**

Upon reaching the breakline **53** the heading **45** of the tool **41** is changed such that the tool edge **42** aligned in parallel with the breakline **53.** In the depicted embodiment the alignment executed such that one end of the tool edge **42** is touching the breakline **53.** The tool **41** might be redirected at the breakline **53** in accordance to the second polygon **52.**

After transiting the breakline operator steering command adjustment might be generated in order to align the tool to the second orientation and the second direction of motion **47** in respect to the second polygon **52.** The second orientation and second direction of motion **47** relative to the second polygon **52** are respectively equal to the prior orientation and direction of motion **46** relative to the first polygon **51** In the depicted embodiment the restoring is executed such that one end of the tool edge **42** is touching the breakline **53.** Instead of the directions of motion **46,47** the velocities might be utilized, if having an identical speed of the tool **41** is beneficial.

Figure 5 depicts two modes of excavating task near the breakline. In the first type of operation the direction of motion **46** of the bucket **41** intersects the breakline **53** of the first polygon **51** and the second polygon **52.** The intent of the operator is at least to reach the breakline **53** or to transit to the second polygon **52.** In the second type of operation the bucket **41** has the second direction of motion **47** essentially parallel to the breakline **53,** i.e. the intent of the operator in this case is not to transit the breakline **53.**

In some embodiments the controller being further configured to perform a semi-automatic parallel operation function. The semi-automatic parallel operation function comprises identifying a parallel operation based on actually read operator steering commands and based on actual referenced position and heading **45** of the tool **41** with respect to the breakline **53** of the design model.

In some embodiments the identification is based on a second criterion. The second criterion comprises that the second direction of motion **47** of the tool **41** is essentially parallel to the breakline **53,** and the tool edge **42** is essentially touching the breakline **53.** Essentially parallel and essentially touching for the present invention means that the operator positioned the tool **41** with the intention of excavating parallel to the breakline **53.** The direction of motion **46** and second direction of motion **47** are purely descriptive and introduced for readability reasons alone. The two directions of motion **46,47** represent equivalent features.

Needless to say that alternative formulations for the first and second criteria are possible for the present invention. In particular the first and second criteria might also comprise the speed of the tool. Alternatively the first and second criteria might be provided on the basis of the previous excavating actions.

Although the invention is illustrated above, partly with reference to some specific embodiments, it must be understood that numerous modifications and combinations of different features of the embodiments can be made. All of these modifications lie within the scope of the appended claims.

## Claims

1. A controller for an excavating machine, the excavating machine comprising
- a tool (41) comprising a tool edge (42),
- an arm comprising multiple links and a tool joint for moving the tool (41), wherein the tool (41) being attached to the tool joint,
- a set of sensors configured to provide sensor reading data regarding a position and a heading (45) of the tool (41), and
- a chassis (12),
the controller comprising an input interface and a computing unit,
- the input interface being configured to receive operator steering commands of an operator regarding a desired position and heading (45) and/or movement of the tool (41),
- the computing unit being configured to read the operator steering commands and to control the arm to reproduce the desired position and heading (45) and/or movement of the tool (41),
- the computing unit being configured to read a design model comprising a reference surface (50), wherein the reference surface (50) comprising two polygons (51,52) defining a breakline (53),
- the computing unit being configured to reference the position and heading (45) of the tool (41) with respect to the design model,
- the controller being configured for performing a semi-automatic surface following function, in which operator steering command adjustment commands are generated, based on an actual referenced position and heading (45) of the tool (41) with respect to the design model and on actually read operator steering commands, in order to redirect the tool edge (42) in accordance with the reference surface (50),
**characterized in that**
- the controller being further configured for performing a semi-automatic breakline-transition function including
∘ identifying a breakline-transition move based on actually read operator steering commands and based on actual referenced position and heading (45) of the tool (41) with respect to the breakline (53) of the design model,
∘ generating operator steering command adjustment commands, based on actual referenced position and heading (45) of the tool (41) with respect to the breakline (53) and on actually read operator steering commands, in order to bring the tool edge (42) to be aligned in parallel with the breakline (53).

2. The controller according to claim 1, wherein the controller being configured for performing the semi-automatic breakline-transition
**characterized in that**
generating operator steering command adjustment commands, based on actual referenced position and heading (45) of the tool (41) with respect to the design model and on actually read operator steering commands, in order to
- bring the tool edge (42) to be aligned in parallel with the breakline (53), and
- redirect the tool edge (42) in accordance with the reference surface (50).

3. The controller according to claim 2, wherein the controller being configured for performing the semi-automatic breakline-transition
**characterized in that**
generating operator steering command adjustment commands, based on an actual referenced position and orientation (pose) of the tool with respect to the design model and on actually read operator steering commands, in order to move the tool edge (42) along a direction of motion (46) perpendicular to the breakline (53).

4. The controller according to any of the preceding claims, wherein the controller being further configured for
- storing a prior heading data representing the heading (45) of the tool (41) at the activation of the semi-automatic breakline transition function,
- automatically restoring the heading (45) of the tool (41) after transiting the breakline (53) based on the prior heading data.

5. The controller according to any of the preceding claims wherein the
- excavating machine being an excavator (1),
- the chassis (12) being rotatable to 360°,
- the tool (41) being a bucket,
- the arm comprising a boom (21) and a stick (22),
- the tool joint being a tilt-rotator (23).

6. The controller according to any of the preceding claims, wherein the controller being further configured for performing a semi-automatic parallel operation function, including
- identifying a parallel operation move based on actually read operator steering commands and based on actual referenced position and heading (45) of the tool (41) with respect to the breakline (53) of the design model,
- generating operator steering command adjustment commands, based on actual referenced position and heading (45) of the tool (41) with respect to the design model and based on actually read operator steering commands, in order to
∘ redirect the tool edge (42) in accordance with the reference surface (50),
∘ redirect the tool edge (42) into a position, wherein the tool edge (42) touching the breakline (53), and
∘ move the tool edge (42) in the reference surface (50), along the direction of motion (46) parallel to the breakline.

7. The controller according to claim 6, wherein,
- the set of sensors being configured to acquire sensor reading data comprising information on an actual surface (60),
- the controller comprising an output interface, the output interface being configured to display
∘ the position and heading (45) of the tool (41), the reference surface (50), the actual surface (60), and a status of the semi-automatic breakline-transition function and/or the semi-automatic parallel operation function, and
∘ a guidance feedback comprising the position and heading (45) of the tool (41) relative to the breakline (53).

8. The controller according to claim 7, wherein the input interface comprising an input area of a touchscreen, the input area being configured to activate and deactivate the semi-automatic breakline-transition function and its options and/or the semi-automatic parallel operation function and its options and/or the guidance feedback and its options.

9. Method of semi-automatic breakline-transition for an excavating machine equipped with a controller of any of the preceding claims, the method comprising the steps of,
- aligning the tool edge (42) in accordance to the reference surface (50),
**characterized in that**
- identifying the breakline-transition move based on actually read operator steering commands and based on actual referenced position and heading (45) of the tool (41) with respect to the breakline (53) of the design model,
- generating operator steering command adjustment commands, based on actual referenced position and heading (45) of the tool (41) with respect to the design model and on actually read operator steering commands, in order to
∘ bring the tool edge (42) to be aligned in parallel with the breakline (53), and
∘ redirect the tool edge (42) in accordance with the reference surface (50).

10. The method according to claim 9, wherein the tool edge (42) being stopped automatically at the breakline (53).

11. The method according to any of claims 9 to 10, wherein the direction of motion (46) of the tool (41) being automatically aligned to a second polygon (52) at the breakline (53).

12. The method according to any of the claims 9 to 11, wherein the movement of the tool (41) being unsuspended during the alignment of the tool (41).

13. Method of semi-automatic parallel operation function for an excavating machine equipped with a controller of any of the claims 6 to 8, the method comprising the steps of:
- identifying a parallel operation move based on actually read operator steering commands and based on actual referenced position and heading (45) of the tool (41) with respect to the breakline (53) of the design model
- generating operator steering command adjustment commands, based on actual referenced position and heading (45) of the tool (41) with respect to the design model and based on actually read operator steering commands, in order to
∘ redirect the tool edge (42) in accordance with the reference surface (50),
∘ redirect the tool edge (42) into a position touching the breakline (53), and
∘ move the tool edge (42) in the reference surface (50), along the direction of motion (46) parallel to the breakline.

14. A computer program product for the controller according to any of the claims 1 to 8, which, when executed by the computing unit, causes the automatic execution of the steps of the method according to any of the claims 9 to 12.

15. A computer program product for the controller according to any of the claims 6 to 8, which, when executed by the computing unit, causes the automatic execution of the steps of the method according to claims 13.

## Patentansprüche

1. Steuerung für eine Baggermaschine, wobei die Baggermaschine Folgendes umfasst:
- ein Werkzeug (41), das eine Werkzeugkante (42) umfasst,
- einen Arm, der mehrere Glieder und eine Werkzeugkupplung zum Bewegen des Werkzeugs (41) umfasst, wobei das Werkzeug (41) an der Werkzeugkupplung befestigt ist,
- einen Satz von Sensoren, die dazu konfiguriert sind, Sensorlesedaten bezüglich einer Position und Ausrichtung (45) des Werkzeugs (41) bereitzustellen, und
- ein Fahrgestell (12),
wobei die Steuerung eine Eingabeschnittstelle und eine Recheneinheit umfasst,
- wobei die Eingabeschnittstelle dazu konfiguriert ist, Bediener-Lenkbefehle von einem Bediener hinsichtlich einer gewünschten Position und Ausrichtung (45) und/oder Bewegung des Werkzeugs (41) zu empfangen,
- wobei die Recheneinheit dazu konfiguriert ist, die Bediener-Lenkbefehle zu lesen und den Arm zu steuern, um die gewünschte Position und Ausrichtung und/oder Bewegung des Werkzeugs (41) zu reproduzieren,
- wobei die Recheneinheit dazu konfiguriert ist, ein Konstruktionsmodell zu lesen, das eine Referenzoberfläche (50) umfasst, wobei die Referenzoberfläche (50) zwei Polygone (51, 52) umfasst, die eine Bruchlinie (53) definieren,
- wobei die Recheneinheit dazu konfiguriert ist, die Position und Ausrichtung (45) des Werkzeugs (41) in Bezug auf das Konstruktionsmodell zu referenzieren,
- wobei die Steuerung dazu konfiguriert ist, eine halbautomatische Oberflächen-Folgefunktion durchzuführen, bei der Anpassungsbefehle für die Bediener-Lenkbefehle basierend auf der tatsächlichen referenzierten Position und Ausrichtung (45) des Werkzeugs (41) in Bezug auf das Konstruktionsmodell und basierend auf den tatsächlich gelesenen Bediener-Lenkbefehlen erzeugt werden, um die Werkzeugkante (42) gemäß der Referenzoberfläche (50) umzulenken,
**dadurch gekennzeichnet, dass**
- die Steuerung ferner dazu konfiguriert ist, eine halbautomatische Bruchlinien-Übergangsfunktion durchzuführen, einschließlich des
∘ Identifizierens einer Bruchlinien-Übergangsbewegung basierend auf den tatsächlich gelesenen Bediener-Lenkbefehlen und basierend auf der tatsächlichen referenzierten Position und Ausrichtung (45) des Werkzeugs (41) in Bezug auf die Bruchlinie (53) des Konstruktionsmodells,
∘ Erzeugens von Anpassungsbefehlen für die Bediener-Lenkbefehle basierend auf der tatsächlichen referenzierten Position und Ausrichtung (45) des Werkzeugs (41) in Bezug auf die Bruchlinie (53) und den tatsächlich gelesenen Bediener-Lenkbefehlen, um die Werkzeugkante (42) parallel zur Bruchlinie (53) auszurichten.

2. Steuerung nach Anspruch 1, wobei die Steuerung dazu konfiguriert ist, den halbautomatischen Bruchlinien-Übergang durchzuführen,
**dadurch gekennzeichnet, dass**
Anpassungsbefehle für die Bediener-Lenkbefehle basierend auf der tatsächlichen referenzierten Position und Ausrichtung (45) des Werkzeugs (41) in Bezug auf das Konstruktionsmodell und auf den tatsächlich gelesenen Bediener-Lenkbefehlen erzeugt werden, um
- die Werkzeugkante (42) parallel zur Bruchlinie (53) auszurichten, und
- die Werkzeugkante (42) gemäß der Referenzoberfläche (50) umzulenken.

3. Steuerung nach Anspruch 2, wobei die Steuerung dazu konfiguriert ist, den halbautomatischen Bruchlinien-Übergang durchzuführen,
**dadurch gekennzeichnet, dass**
Anpassungsbefehle für die Bediener-Lenkbefehle basierend auf der tatsächlichen referenzierten Position und Ausrichtung (45) des Werkzeugs (41) in Bezug auf das Konstruktionsmodell und auf den tatsächlich gelesenen Bediener-Lenkbefehlen erzeugt werden, um die Werkzeugkante (42) entlang einer Bewegungsrichtung (46) senkrecht zur Bruchlinie (53) zu bewegen.

4. Steuerung nach einem der vorhergehenden Ansprüche, wobei die Steuerung ferner für Folgendes konfiguriert ist:
- Speichern von vorherigen Ausrichtungsdaten, die die Ausrichtung (45) des Werkzeugs (41) bei Aktivierung der halbautomatischen Bruchlinien-Übergangsfunktion darstellen,
- automatisches Wiederherstellen der Ausrichtung (45) des Werkzeugs (41) nach dem Passieren der Bruchlinie (53) basierend auf den vorherigen Ausrichtungsdaten.

5. Steuerung nach einem der vorhergehenden Ansprüche, wobei
- die Baggermaschine ein Bagger (1) ist,
- das Fahrgestell (12) um 360° drehbar ist,
- das Werkzeug (41) eine Schaufel ist,
- der Arm einen Ausleger (21) und einen Stiel (22) umfasst,
- wobei die Werkzeugkupplung ein Tiltrotator (23) ist.

6. Steuerung nach einem der vorhergehenden Ansprüche, wobei die Steuerung ferner dazu konfiguriert ist, eine halbautomatische Parallelbetriebsfunktion durchzuführen, einschließlich des
- Identifizierens einer Parallelbetriebsbewegung basierend auf den tatsächlich gelesenen Bediener-Lenkbefehlen und basierend auf der tatsächlichen referenzierten Position und Ausrichtung (45) des Werkzeugs (41) in Bezug auf die Bruchlinie (53) des Konstruktionsmodells,
- Erzeugens von Anpassungsbefehlen für die Bediener-Lenkbefehle basierend auf der tatsächlichen referenzierten Position und Ausrichtung (45) des Werkzeugs (41) in Bezug auf das Konstruktionsmodell und basierend auf den tatsächlich gelesenen Bediener-Lenkbefehlen, um
∘ die Werkzeugkante (42) gemäß der Referenzoberfläche (50) umzulenken,
∘ die Werkzeugkante (42) in eine Position umzulenken, wobei die Werkzeugkante (42) die Bruchlinie (53) berührt, und
∘ die Werkzeugkante (42) in der Referenzoberfläche (50) entlang der Bewegungsrichtung (46) parallel zur Bruchlinie zu bewegen.

7. Steuerung nach Anspruch 6, wobei
- der Satz von Sensoren dazu konfiguriert ist, Sensorlesedaten zu erfassen, die Informationen über eine tatsächliche Oberfläche (60) umfassen,
- wobei die Steuerung eine Ausgabeschnittstelle umfasst, wobei die Ausgabeschnittstelle dazu konfiguriert ist, Folgendes anzuzeigen:
∘ die Position und Ausrichtung (45) des Werkzeugs (41), die Referenzoberfläche (50), die tatsächliche Oberfläche (60) und einen Status der halbautomatischen Bruchlinien-Übergangsfunktion und/oder der halbautomatischen Parallelbetriebsfunktion, und
∘ eine Führungsrückmeldung, die die Position und Ausrichtung (45) des Werkzeugs (41) relativ zur Bruchlinie (53) umfasst.

8. Steuerung nach Anspruch 7, wobei die Eingabeschnittstelle einen Eingabebereich auf einem Touchscreen umfasst, wobei der Eingabebereich dazu konfiguriert ist, die halbautomatische Bruchlinien-Übergangsfunktion und deren Optionen und/oder die halbautomatische Parallelbetriebsfunktion und deren Optionen und/oder die Führungsrückmeldung und deren Optionen zu aktivieren und deaktivieren.

9. Verfahren des halbautomatischen Bruchlinien-Übergangs für eine Baggermaschine, die mit einer Steuerung nach einem der vorhergehenden Ansprüche ausgestattet ist, wobei das Verfahren die folgenden Schritte umfasst:
- Ausrichten der Werkzeugkante (42) gemäß der Referenzoberfläche (50),
**gekennzeichnet durch das**
- Identifizieren einer Bruchlinien-Übergangsbewegung basierend auf den tatsächlich gelesenen Bediener-Lenkbefehlen und basierend auf der tatsächlichen referenzierten Position und Ausrichtung (45) des Werkzeugs (41) in Bezug auf die Bruchlinie (53) des Konstruktionsmodells,
- Erzeugen von Anpassungsbefehlen für die Bediener-Lenkbefehle basierend auf der tatsächlichen referenzierten Position und Ausrichtung (45) des Werkzeugs (41) in Bezug auf das Konstruktionsmodell und den tatsächlich gelesenen Bediener-Lenkbefehlen, um
∘ die Werkzeugkante (42) parallel zur Bruchlinie (53) auszurichten, und
∘ die Werkzeugkante (42) gemäß der Referenzoberfläche (50) umzulenken.

10. Verfahren nach Anspruch 9, wobei die Werkzeugkante (42) automatisch an der Bruchlinie (53) angehalten wird.

11. Verfahren nach einem der Ansprüche 9 bis 10, wobei die Bewegungsrichtung (46) des Werkzeugs (41) an der Bruchlinie (53) automatisch an einem zweiten Polygon (52) ausgerichtet wird.

12. Verfahren nach einem der Ansprüche 9 bis 11, wobei die Bewegung des Werkzeugs (41) während der Ausrichtung des Werkzeugs (41) nicht unterbrochen wird.

13. Verfahren zur halbautomatischen Parallelbetriebsfunktion für eine Baggermaschine, die mit einer Steuerung nach einem der Ansprüche 6 bis 8 ausgestattet ist, wobei das Verfahren die folgenden Schritte umfasst:
- Identifizieren einer Parallelbetriebsbewegung basierend auf den tatsächlich gelesenen Bediener-Lenkbefehlen und basierend auf der tatsächlichen referenzierten Position und Ausrichtung (45) des Werkzeugs (41) in Bezug auf die Bruchlinie (53) des Konstruktionsmodells,
- Erzeugen von Anpassungsbefehlen für die Bediener-Lenkbefehle basierend auf der tatsächlichen referenzierten Position und Ausrichtung (45) des Werkzeugs (41) in Bezug auf das Konstruktionsmodell und den tatsächlich gelesenen Bediener-Lenkbefehlen, um
∘ die Werkzeugkante (42) gemäß der Referenzoberfläche (50) umzulenken,
∘ die Werkzeugkante (42) in eine Position, die die Bruchlinie (53) berührt, umzulenken, und
∘ die Werkzeugkante (42) in der Referenzoberfläche (50) entlang der Bewegungsrichtung (46) parallel zur Bruchlinie zu bewegen.

14. Computerprogrammprodukt für die Steuerung nach einem der Ansprüche 1 bis 8, das, wenn es durch die Recheneinheit ausgeführt wird, die automatische Ausführung der Schritte des Verfahrens nach einem der Ansprüche 9 bis 12 veranlasst.

15. Computerprogrammprodukt für die Steuerung nach einem der Ansprüche 6 bis 8, das, wenn es durch die Recheneinheit ausgeführt wird, die automatische Ausführung der Schritte des Verfahrens nach Anspruch 13 veranlasst.

## Revendications

1. Contrôleur pour une machine d'excavation, ladite machine d'excavation comprenant :
- un outil (41) présentant un bord d'outil (42),
- un bras comprenant plusieurs segments et une articulation d'outil permettant de mouvoir l'outil (41), ledit outil (41) étant lié à ladite articulation d'outil,
- un jeu de capteurs conçus pour fournir des données de relevés de capteurs concernant la position et le cap (45) dudit outil (41), et
- un châssis (12),
ledit contrôleur comportant une interface d'entrée et une unité informatique,
- ladite interface d'entrée étant conçue pour recevoir des commandes de pilotage en provenance d'un opérateur concernant une position et un cap (45) souhaités et/ou un mouvement souhaité de l'outil (41),
- ladite unité informatique étant conçue pour lire les commandes de pilotage par opérateur et pour commander le bras afin de produire la position et le cap (45) souhaités et/ou le mouvement souhaité de l'outil (41),
- ladite unité informatique étant conçue pour lire un modèle de conception comprenant une surface de référence (50), ladite surface de référence (50) comprenant deux polygones (51, 52) définissant une ligne de discontinuité (53),
- ladite unité informatique étant conçue pour référencer la position et le cap (45) de l'outil (41) par rapport audit modèle de conception,
- ledit contrôleur étant conçu pour exécuter une fonction semi-automatique de suivi de surface, dans laquelle il est généré des commandes d'ajustement de la commande de pilotage par opérateur, compte tenu de la position et du cap (45) référencés réels de l'outil (41) par rapport au modèle de conception et compte tenu des commandes de pilotage par opérateur réellement lues, afin de rediriger le bord d'outil (42) selon la surface de référence (50),
**caractérisé en ce que :**
- ledit contrôleur est conçu en outre pour exécuter une fonction semi-automatique de franchissement de ligne de discontinuité comprenant les étapes consistant à :
∘ identifier un mouvement de franchissement de ligne de discontinuité compte tenu des commandes de pilotage par opérateur réellement lues et compte tenu de la position et du cap (45) référencés réels de l'outil (41) par rapport à la ligne de discontinuité (53) du modèle de conception,
∘ générer des commandes d'ajustement de la commande de pilotage par opérateur, compte tenu de la position et du cap (45) référencés réels de l'outil (41) par rapport à la ligne de discontinuité (53) et compte tenu des commandes de pilotage par opérateur réellement lues, afin d'aligner le bord d'outil (42) parallèlement à la ligne de discontinuité (53).

2. Contrôleur selon la revendication 1 conçu pour exécuter la fonction semi-automatique de franchissement de ligne de discontinuité,
**caractérisé par** :
la génération de commandes d'ajustement de la commande de pilotage par opérateur, compte tenu de la position et du cap (45) référencés réels de l'outil (41) par rapport au modèle de conception et compte tenu des commandes de pilotage par opérateur réellement lues, afin de :
- aligner le bord d'outil (42) parallèlement à la ligne de discontinuité (53), et
- rediriger le bord d'outil (42) selon la surface de référence (50).

3. Contrôleur selon la revendication 2 conçu pour exécuter la fonction semi-automatique de franchissement de ligne de discontinuité,
**caractérisé par** :
la génération de commandes d'ajustement de la commande de pilotage par opérateur, compte tenu d'une position et d'une orientation (pose) référencées réelles de l'outil par rapport au modèle de conception et compte tenu des commandes de pilotage par opérateur réellement lues, afin de déplacer le bord d'outil (42) dans une direction de mouvement (46) perpendiculaire à la ligne de discontinuité (53).

4. Contrôleur selon l'une quelconque des revendications précédentes conçu en outre conçue pour :
- enregistrer des données de cap antérieur représentant le cap (45) de l'outil (41) lors de l'activation de la fonction semi-automatique de franchissement de ligne de discontinuité,
- restaurer automatiquement le cap (45) de l'outil (41) après le franchissement de la ligne de discontinuité (53), compte tenu des données de cap antérieur.

5. Contrôleur selon l'une quelconque des revendications précédentes, dans lequel
- la machine d'excavation est une excavatrice (1),
- le châssis (12) peut tourner à 360°,
- l'outil (41) est un godet,
- le bras comprend une flèche (21) et un balancier (22),
- l'articulation d'outil est un organe (23) permettant l'inclinaison et la rotation.

6. Contrôleur selon l'une quelconque des revendications précédentes conçu en outre pour exécuter une fonction semi-automatique d'opération parallèle, comprenant les étapes suivantes :
- l'identification d'un mouvement d'opération parallèle compte tenu des commandes de pilotage par opérateur réellement lues et compte tenu de la position et du cap (45) référencés réels de l'outil (41) par rapport à la ligne de discontinuité (53) du modèle de conception,
- la génération de commandes d'ajustement de la commande de pilotage par opérateur, compte tenu de la position et du cap (45) référencés réels de l'outil (41) par rapport au modèle de conception et compte tenu des commandes de pilotage par opérateur réellement lues, afin de :
∘ rediriger le bord d'outil (42) selon la surface de référence (50),
∘ rediriger le bord d'outil (42) dans une position où ledit bord d'outil (42) touche la ligne de discontinuité (53), et
∘ déplacer le bord d'outil (42) dans la surface de référence (50), dans la direction de mouvement (46) parallèle à la ligne de discontinuité.

7. Contrôleur selon la revendication 6, dans lequel
- le jeu de capteurs est conçu pour acquérir des données de relevés de capteurs, dont des informations sur une surface réelle (60),
- ledit contrôleur comprend une interface de sortie, ladite interface de sortie étant conçue pour afficher :
∘ la position et le cap (45) de l'outil (41), la surface de référence (50), la surface réelle (60) et un état de la fonction semi-automatique de franchissement de ligne de discontinuité et/ou de la fonction semi-automatique d'opération parallèle, et
∘ un retour de guidage comprenant la position et le cap (45) de l'outil (41) par rapport à la ligne de discontinuité (53).

8. Contrôleur selon la revendication 7, dans lequel l'interface d'entrée comprend une zone d'entrée d'un écran tactile, ladite zone d'entrée étant conçue pour activer et désactiver la fonction semi-automatique de franchissement de ligne de discontinuité et ses options et/ou la fonction semi-automatique d'opération parallèle et ses options et/ou le retour de guidage et ses options.

9. Procédé de franchissement semi-automatique de ligne de discontinuité pour une machine d'excavation dotée d'un contrôleur selon l'une quelconque des revendications précédentes, ledit procédé comprenant l'étape consistant à :
- aligner le bord d'outil (42) selon la surface de référence (50),
**caractérisé par**
- l'identification du mouvement de franchissement de ligne de discontinuité compte tenu des commandes de pilotage par opérateur réellement lues et compte tenu de la position et du cap (45) référencés réels de l'outil (41) par rapport à la ligne de discontinuité (53) du modèle de conception,
- la génération de commandes d'ajustement de la commande de pilotage par opérateur, compte tenu de la position et du cap (45) référencés réels de l'outil (41) par rapport au modèle de conception et compte tenu des commandes de pilotage par opérateur réellement lues, afin de :
∘ aligner le bord d'outil (42) parallèlement à la ligne de discontinuité (53), et
∘ rediriger le bord d'outil (42) selon la surface de référence (50).

10. Procédé selon la revendication 9, dans lequel le bord d'outil (42) est automatiquement arrêté à la ligne de discontinuité (53).

11. Procédé selon l'une quelconque des revendications 9 et 10, dans lequel la direction de mouvement (46) de l'outil (41) est automatiquement alignée sur un deuxième polygone (52) à la ligne de discontinuité (53).

12. Procédé selon l'une quelconque des revendications 9 à 11, dans lequel le mouvement de l'outil (41) est ininterrompu pendant l'alignement dudit outil (41).

13. Procédé propre à une fonction semi-automatique d'opération parallèle pour une machine d'excavation dotée d'un contrôleur selon l'une quelconque des revendications 6 à 8, ledit procédé comprenant les étapes consistant à :
- identifier un mouvement d'opération parallèle compte tenu des commandes de pilotage par opérateur réellement lues et compte tenu de la position et du cap (45) référencés réels de l'outil (41) par rapport à la ligne de discontinuité (53) du modèle de conception,
- générer des commandes d'ajustement de la commande de pilotage par opérateur, compte tenu de la position et du cap (45) référencés réels de l'outil (41) par rapport au modèle de conception et compte tenu des commandes de pilotage par opérateur réellement lues, afin de :
∘ rediriger le bord d'outil (42) selon la surface de référence (50),
∘ rediriger le bord d'outil (42) dans une position où il touche la ligne de discontinuité (53), et
∘ déplacer le bord d'outil (42) dans la surface de référence (50) dans la direction de mouvement (46) parallèle à la ligne de discontinuité.

14. Produit-programme d'ordinateur pour le contrôleur selon l'une quelconque des revendications 1 à 8, qui, lorsqu'il est exécuté par l'unité informatique, déclenche l'exécution automatique des étapes du procédé selon l'une quelconque des revendications 9 à 12.

15. Produit-programme d'ordinateur pour le contrôleur selon l'une quelconque des revendications 6 à 8, qui, lorsqu'il est exécuté par l'unité informatique, déclenche l'exécution automatique des étapes du procédé selon la revendication 13.
